# EUROPÄISCHE PATENTSCHRIFT

(11) **EP 2 352 001 B1**
(45) Veröffentlichungstag und Bekanntmachung des Hinweises auf die Patenterteilung: **04.07.2018**
(21) Anmeldenummer: 11000653.3
(22) Anmeldetag: 27.01.2011
(51) Int. Cl.: G01L 1/22

(54) **Kraftmessbolzen**
Load bolt
Boulon de mesure de force

(30) Priorität: 28.01.2010 DE 102010006234
(43) Veröffentlichungstag der Anmeldung: 03.08.2011
(73) Patentinhaber: Hottinger Baldwin Messtechnik GmbH, 64293 Darmstadt (DE)
(72) Erfinder: Schuster, Hans, D-64347 Griesheim (DE); Jauch, Christian, D-64331 Weiterstadt (DE)
(74) Vertreter: Staudte, Ralph

(56) Entgegenhaltungen:
- EP-A1- 0 154 728
- DE-A1-102007 012 157
- GB-A- 1 577 341
- JP-A- 2001 221 699
- US-A- 4 858 475

## Beschreibung

Die Erfindung betrifft einen Kraftmessbolzen gemäß dem Oberbegriff des Patentanspruchs 1.

Derartige Kraftmessbolzen werden in der industriellen Messtechnik überall eingesetzt, wo an einer Achse Kräfte oder Lasten gemessen werden sollen.

So ist aus der DE 35 00 891 C1 ein Messbolzen bekannt, der aus zwei verbundenen Teilen besteht, die in Querrichtung aus zwei gleichartigen Bolzenhälften gebildet werden. In jeder Bolzenhälfte sind dabei Aussparungen eingefräst, die aus mindestens einer ebenen Fläche bestehen, die parallel zur Schnittfläche der Bolzenhälften verlaufen und symmetrisch zu einem Mittelteil angeordnet sind. Auf diesen ebenen Flächen der Aussparungen sind gegenüberliegend Dehnungsmessstreifen appliziert, die die Schubspannung bei einer Belastung des Messbolzens in Querrichtung erfassen können. Dieser Messbolzen arbeitet zwar nach dem Scherkraft-Messprinzip, ist aber wegen seines bolzenartigen relativ dicken Verformungskörpers für viele Kraftmessungen nicht empfindlich genug.

Aus der ermittelten DE 33 40 438 C2 ist eine Messanordnung für Kraftmessungen an einem Auflager eines Wägeobjektes bekannt. Diese Messanordnung enthält ebenfalls einen Kraftmessbolzen, der quer zur Längsachse und symmetrisch zum Mittelteil mindestens zwei durchgängige Bohrungen enthält, an deren Innenwandflächen gegenüberliegend Scherkraftaufnehmer appliziert sind, mit denen eine Belastung des Kraftmessbolzens erfassbar ist. Da dieser Kraftmessbolzen zwischen einer Gabel und einem zangenartigen Lagerbock drehbar gelagert ist, können damit auch Längskräfte, die nicht vertikal ausgerichtet sind, gemessen werden. Allerdings ist bei dieser Ausbildung die Applizierung der Dehnungsmessstreifen symmetrisch an den Außenwandungen der Durchgangsbohrungen aufwendig ausführbar und nur schwer mit einer hohen Genauigkeit herstellbar.

Ein weiterer Kraftmessbolzen ist aus der DE 25 18 548 C3 bekannt, der insbesondere zur Trossenkraftmessung für Schiffe vorgesehen ist. Dieser Kraftmessbolzen ist zwischen einer Trossenhalterung und einem Trossenhaken in Zugrichtung drehbar angeordnet. Dabei ist der Kraftmessbolzen als einteiliger Rundstab ausgebildet, an dessen Mittelteil die Trossenhalterung und an dessen angrenzenden Endbereichen der Trossenhaken drehbar gelagert ist. Zwischen diesen beiden Lagerstellen ist durch einen rechteckigen Abschnitt einer umlaufenden Nut ein Verformungsbereich geschaffen, bei dem zwei gegenüberliegende Flächenabschnitte plan abgeflacht sind. An diesen gegenüberliegenden planen Oberflächenabschnitten sind gegenüberliegend insgesamt acht Dehnungsmessstreifen als Scherkraftaufnehmer appliziert. Bei einer Trossenbelastung richtet sich der Kraftmessbolzen entsprechend der Zugrichtung aus und erfasst diese durch die vorgesehenen Scherkraftaufnehmer. Allerdings wird bei dem vorbekannten Messbolzen die Kraft am Trossenhaken seitlich neben den Verformungsabschnitten eingeleitet, wodurch dieser Kraftmessbolzen eine relativ große axiale Länge erfordert, die nicht überall einsetzbar ist.

Aus der US 4,364,279 ist ein weiterer Kraftmessbolzen bekannt, der als einteiliger Rundbolzen ausgebildet ist. Bei diesem Kraftmessbolzen sind axial zwischen den drei Lagerstellen quer zur Längsrichtung gegenüberliegend vier taschenförmige Aussparungen vorgesehen, die innen parallele plane Flächenabschnitte als Verformungskörper bilden, die eine Längswand darstellen. An dieser Längswand sind jeweils zwei gegenüberliegende Scherkraftaufnehmer angeordnet, so dass mit einem derartigen Kraftmessbolzen eine lineare Kraftbelastung erfassbar ist. Allerdings sind bei diesem Kraftmessbolzen die Messkörperabschnitte in axialer Richtung zwischen den äußeren Lagerstellen und der mittleren Lagerstelle angeordnet, so dass auch dieser Kraftmessbolzen langbauend ist.

Aus der JP 2001 221699 A ist noch ein weiterer Kraftmessbolzen bekannt. Bei diesem ist ein rundbolzenartiger Mittelteil durch zwei parallel zu seiner Längsachse und in einem Winkel von 90° zueinander eingebrachte Schlitze in vier Krafteinleitungsteile aufgeteilt. Jeder dieser vier Krafteinleitungsteile geht an seinen beiden äußeren Enden in jeweils einen stegförmigen Verformungskörper über. Die äußeren Enden aller stegförmigen Verformungskörper auf der einen Seite enden in einem massiven Lagerteil und die äußeren Enden aller stegförmigen Verformungskörper auf der anderen Seite enden in einem weiteren massiven Lagerteil. Jeder der stegförmigen Verformungskörper ist an seiner Innenseite, d. h. der zu der Längsachse des rundbolzenartigen Mittelteils gerichteten Seite, mit einer kreisbogenförmigen Ausnehmung versehen, und an seiner gegenüberliegenden Seite mit zwei Dehnungsmessstreifen versehen. Mittels der insgesamt 16 Dehnungsmessstreifen können Kräfte wie z. B. Greifkräfte in elektrische Signale umgesetzt werden. Dieser Kraftmessbolzen erfordert eine relativ große axiale Länge und ist nicht für große Kräfte, wie sie z. B. bei der Befestigung von Off-Shore-Ölbohr-Plattformen auftreten, geeignet.

Der Erfindung liegt deshalb die Aufgabe zugrunde, einen Kraftmessbolzen der eingangs genannten Art so zu verbessern, dass er auch zwischen relativ schmalen Lagerstellen einsetzbar ist, dass er aber gleichfalls eine hohe Messgenauigkeit aufweist und dass bei ihm die empfindlichen Messelemente auf einfache Weise hermetisch abdichtbar sind.

Diese Aufgabe wird durch die im Patentanspruch 1 angegebene Erfindung gelöst. Weiterbildungen und vorteilhafte Ausführungsbeispiele der Erfindung sind in den Unteransprüchen angegeben.

Die Erfindung hat den Vorteil, dass die Messelemente mit ihren stegartigen Verformungskörpern innerhalb der äußeren Lagerabschnitte integriert sind und somit eine sehr kurzbauende Ausführung ermöglichen. Dadurch lassen sich gleichzeitig auch Kraftmessbolzen ausführen, die große Außendurchmesser aufweisen und dadurch nahezu beliebig hohe Kraftbelastungen genau erfassen können. Durch die nach außen offenen Lagerabschnitte können die innenliegenden Messelemente durch einfache scheibenförmige Deckel verschlossen werden, wodurch ein hermetisch dichter Kraftmessbolzen ausführbar ist, der auch in großen Wassertiefen eingesetzt werden kann.

Die Erfindung hat weiterhin den Vorteil, dass durch die beiden vorgesehenen umlaufenden Nuten zwischen den äußeren Lagerstellenabschnitten und dem Mittelteil eine weitgehend kraftnebenschlussfreie Entkopplung der gegensätzlich belasteten Lagerstellen erzielbar ist, obwohl der Schutz der innenliegenden Messelemente gewährleistet bleibt.

Die Erfindung wird anhand eines Ausführungsbeispiels, das in der Zeichnung dargestellt ist, näher erläutert. Es zeigen:
- Fig. 1:: eine Vorderansicht eines Kraftmessbolzens mit vier zentral frei endenden Messstegen;
- Fig. 2:: eine Seitenansicht des Kraftmessbolzens mit den vier zentral frei endenden Messstegen;
- Fig. 3:: ein Schnittbild durch den Kraftmessbolzen mit den vier zentral frei endenden Messstegen;
- Fig. 4:: eine Vorderansicht eines Kraftmessbolzens mit vier mit einem zylinderförmigen Verbindungsbolzen verbundenen Messstegen;
- Fig. 5:: eine Seitenansicht des Kraftmessbolzens mit den vier mit einem zylinderförmigen Verbindungsbolzen verbundenen Messstegen; und
- Fig. 6:: ein Schnittbild durch den Kraftmessbolzen mit den vier mit einem zylinderförmigen Verbindungsbolzen verbundenen Messstegen.

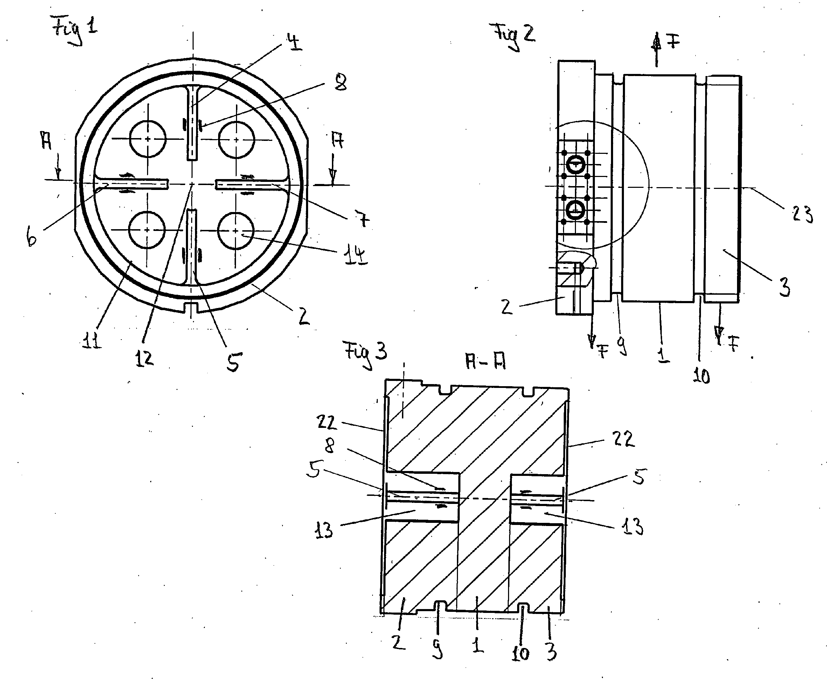

In Fig. 1 bis 3 der Zeichnung ist ein Messkörper gezeigt, der im Wesentlichen einteilig ausgeführt und wie ein Kraftmessbolzen ausgebildet ist und vorzugsweise aus einer Edelstahllegierung, aus Edelstahl oder aus Aluminium besteht. Im axialen Mittelteil 1 etwa auf einem Drittel der Längserstreckung ist der Kraftmessbolzen als Rundbolzen ausgeführt. In diesem ist mindestens eine Längsbohrung 14, die zur Durchführung der Messelementverdrahtung dient, vorgesehen, wobei in dem in Fig. 1 bis 3 dargestellten Mittelteil 1 zur Kabeldurchführung symmetrisch zur Längsachse 23 in den vier Quadranten jeweils eine Längsbohrung 14 eingebracht ist. In Längsrichtung sind an beiden Querschnittsflächen des Mittelteils 1 vier um 90° versetzt angeordnete Längsstege 4, 5, 6, 7 ausgearbeitet, die im Zentrum oder Mittelpunkt 12 voneinander beabstandet sind. Diese Längsstege 4, 5, 6, 7 sind am Außenumfang mit einem jeweiligen zylinderförmigen Außenring als Lagerabschnitt bzw. Lagerringelement 2, 3 verbunden, der gleichzeitig die Verlängerung des Mittelteils 1 darstellt. Axial etwa an den Verbindungsstellen der Längsstege 4, 5, 6, 7 mit dem Mittelteil 1 ist am Außenumfang zwischen den Ringflächen und der äußeren Umfangsfläche des Mittelteils 1 jeweils eine umlaufende Nut 9, 10 eingelassen, die die Lagerringelemente 2, 3 vom Mittelteil 1 kräftemäßig entkoppelt, so dass die Schubspannungen zwischen dem Mittelteil 1 und den äußeren Ringabschnitten fast ausschließlich über die Längsstege verlaufen, die die Verformungskörper darstellen. Dabei sind die Nuten 9, 10 nicht ganz bis zu den Längsstegen eingelassen, um den Innenraum des Messkörpers vor Außeneinflüssen zu schützen.

An den radialen Außenflächen der vier Längsstege 4, 5, 6, 7, die in einem inneren Ringelementraum 13 des jeweiligen Lagerringelements 2, 3 und somit zwischen inneren Mantelflächen 11 der Lagerringelemente 2, 3 verlaufen, sind Dehnungsmessstreifen 8 in Form von Scherkraftaufnehmern appliziert, mit denen sowohl die Zugspannung F der beispielsweise in Trossenrichtung ausgerichteten Längsstege 4, 5, 6, 7 als auch die dazu vorhandenen Querkräfte erfassbar sind. Dabei stellen die Längsstege 4, 5, 6, 7 gleichzeitig Messstege dar. Zur Messung einer Trossenbelastung wird der Mittelpunkt 12 des Messkörpers über eine Zange und die äußeren Lagerringelemente 2, 3 über eine Gabel mit der anzuschließenden Trosse verbunden, wodurch hauptsächlich die in Trossenrichtung ausgerichteten beiden Längsstege 4, 5 die Trossenbelastung erfassen.

Zur hermetischen Abdichtung sind die beiden äußeren Lagerringelementflächen, d. h. die äußeren Querschnittsflächen 18 der Lagerringelemente 2,3, jeweils mit einem teller- oder scheibenförmigen Deckel 22 verschlossen. Dazu wird der Deckel 22 vorzugsweise aufgeschraubt oder mit den Ringflächen verschweißt.

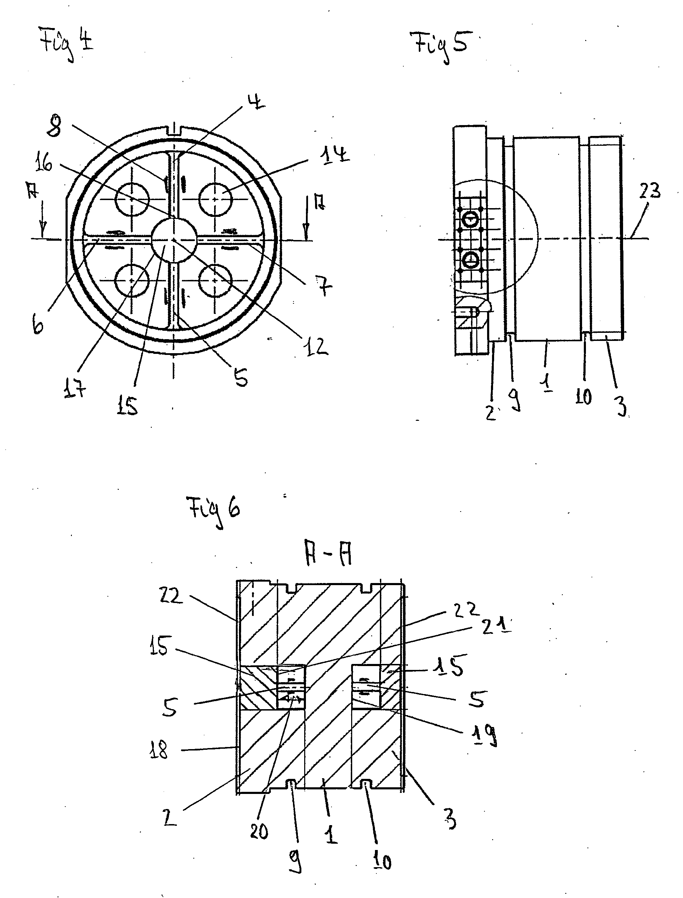

In Fig. 4 bis 6 der Zeichnung ist ein Kraftmessbolzen dargestellt, der im Zentrum oder Mittelpunkt 12 der äußeren Lagerabschnitte 2, 3 symmetrisch zur Längsachse 23 einen zylinderförmigen Verbindungsbolzen 15 aufweist. Ansonsten entspricht die Ausführung dem Kraftmessbolzen, wie er bereits unter Bezugnahme auf Fig. 1 bis 3 der Zeichnung beschrieben ist. Der Verbindungsbolzen 15 wird dabei in den radialen Abstandsbereich der gegenüberliegenden Längsstege 4, 5, 6, 7 eingepasst und durch ein Einschrumpfverfahren fest und kraftschlüssig mit den Längsstegen 4, 5, 6, 7, d. h. deren radialen Enden 16, auf seiner äußeren Mantelfläche 17 verbunden. Dabei ist die Länge des Verbindungsbolzens 15 kleiner als die axiale Breite der Längsstege 4, 5, 6, 7. Dadurch verbleibt zwischen den Stirnflächen 19 des Mittelteils 1 und der inneren Stirnfläche 21 des Verbindungsbolzens 15 ein Abstand 20. In praktischen Versuchen hat sich eine maximale Verbesserung der Messgenauigkeit ergeben, wenn der Verbindungsbolzen 15 eine Länge aufweist, bei der sich ein Abstand 20 ergibt, der symmetrisch zur Nutmitte der umlaufenden Nut 9, 10 ist.

Die in der Zeichnung dargestellten Ausführungen des Messbolzens sind vorzugsweise für die Messung einer Trossenspannung einer Trosse zur Befestigung von Off-Shore-Ölbohr-Plattformen mit einer Nennbelastung von 1.500 kN vorgesehen. Derartige Messbolzen können aber auch für andere Kraftmessaufgaben eingesetzt werden. Zur Messung der Trossenspannung ist dabei vorzugsweise ein Kraftmessbolzen ausgeführt, dessen Außendurchmesser ca. 280 mm und dessen axiale Länge ca. 200 mm beträgt. Davon umfasst der Mittelteil 1 ca. eine Länge von 60 mm, wobei das längere äußere Lagerringelement 2 eine Länge von ca. 80 mm und das kürzere äußere Lagerringelement 3 eine Länge von ca. 60 mm aufweist. Bei diesen Ausführungen haben sich Messstege 4, 5, 6, 7 als vorteilhaft erwiesen, die eine Dicke von ca. 10 mm und eine Länge von ca. 85 mm besitzen.

Zur Messung einer nur linear wirkenden Kraftbelastung reicht es im Grunde aus, dass der Kraftmessbolzen an jedem äußeren Lagerringelement 2, 3 nur zwei in Kraftmessrichtung F ausgerichtete Längsstege 4, 5 aufweist. Zur Erhöhung der Messgenauigkeit der Gesamtbelastung, die auch Kraftkomponenten enthalten kann, die nicht linear angreifen, sind vorzugsweise vier Längsstege 4, 5, 6, 7 mit auf beiden Seiten angeordneten Scherkraftaufnehmern 8 vorgesehen.

## Patentansprüche

1. Kraftmessbolzen, der in axialer Richtung mindestens einen rundbolzenartigen Mittelteil (1) und an seinen Enden zwei außen im wesentlichen runde Lagerabschnitte (2, 3) umfasst und mindestens sich axial nach außen erstreckende in Kraftmessrichtung F ausrichtbare wandartige Verformungskörper (4, 5, 6, 7) aufweist, an denen mindestens vier Scherkraftaufnehmer (8) zur Erfassung der Kraftbelastung zwischen dem Mittelteil (1) und den beiden äußeren Lagerabschnitten (2, 3) appliziert sind, **dadurch gekennzeichnet, dass** die beiden äußeren Lagerabschnitte als Lagerringelemente (2, 3) ausgebildet sind, die die Verformungskörper (4, 5, 6, 7) koaxial umschließen und in radialer Richtung mit den Verformungskörpern (4, 5, 6, 7) und in axialer Richtung mit dem Mittelteil (1) verbunden sind, wobei die Lagerringelemente (2, 3) durch mindestens zwei umlaufende äußere Nuten (9, 10) vom Mittelteil (1) kräftemäßig entkoppelt sind.

2. Kraftmessbolzen nach Anspruch 1, **dadurch gekennzeichnet, dass** die wandartigen Verformungskörper als flache Längsstege (4, 5, 6, 7) ausgebildet sind, die linear zwischen den gegenüberliegenden inneren Mantelflächen (11) der Lagerringelemente (2, 3) verlaufen und zum Mittelpunkt (12) der Ringfläche gerichtet sind, wobei zwischen mindestens zwei sich im Zentrum oder Mittelpunkt (12) gegenüberliegenden Längsstegen (4, 5, 6, 7) ein radialer Abstand vorgesehen ist.

3. Kraftmessbolzen nach Anspruch 2, **dadurch gekennzeichnet, dass** innerhalb des inneren Ringelementraums (13) vier flache gleichartige Längsstege (4, 5, 6, 7) vorgesehen sind, die gegeneinander einen Winkel von 90° bilden.

4. Kraftmessbolzen nach Anspruch 2 oder 3, **dadurch gekennzeichnet, dass** symmetrisch zum Mittelpunkt (12) der Ringelementenfläche zwischen den beabstandeten Längsstegen (4, 5, 6, 7) ein zylinderförmiger Verbindungsbolzen (15) angeordnet ist, der mit den radialen Enden (16) der Längsstegen (4, 5, 6, 7) auf seiner äußeren Mantelfläche (17) kraftschlüssig verbunden ist.

5. Kraftmessbolzen nach Anspruch 4, **dadurch gekennzeichnet, dass** der zylinderförmige Verbindungsbolzen (15) jedes Lagerringelements (2, 3) auf der äußeren Querschnittsfläche (18) des Lagerringelements (2, 3) endet und in seiner axialen Erstreckung von der Stirnfläche (19) des Mittelteils (1) beabstandet ist, wobei der Abstand (20) zwischen der inneren Stirnfläche (21) des Verbindungsbolzens (15) und der Stirnfläche (19) des Mittelteils (1) symmetrisch zur umlaufenden äußeren Nut (9, 10) vorgesehen ist.

6. Kraftmessbolzen nach den Ansprüchen 1 bis 5, **dadurch gekennzeichnet, dass** im Mittelteil (1) mindestens eine Längsbohrung (14) oder vier um 90° versetzt angeordnete Längsbohrungen (14) vorgesehen sind, die zur Durchführung der Messelementverdrahtung dienen.

7. Kraftmessbolzen nach den Ansprüchen 1 bis 3, **dadurch gekennzeichnet, dass** dessen gesamter Messkörper monolithisch ausgebildet ist und aus Edelstahl oder Aluminium besteht.

8. Kraftmessbolzen nach Anspruch 1 bis 7, **dadurch gekennzeichnet, dass** die Stirnflächen (18) der äußeren Lagerabschnitte (2, 3) durch einen scheiben- oder tellerförmigen Deckel (22) hermetisch dicht verschlossen sind.

## Claims

1. Force measuring bolt comprising in the axial direction at least one bolt-type middle portion (1) and comprising at its ends two bearing sections (2, 3) that are substantially round at the outside, and having wall-like deformation bodies (4, 5, 6, 7) extending at least axially outwards and alignable in force measuring direction F, to which at least four shear force transducers (8) are applied to detect the load between the middle portion (1) and the two outer bearing sections (2, 3), **characterised in that** the two outer bearing sections are designed as bearing ring elements (2, 3) which coaxially surround the deformation bodies (4, 5, 6, 7) and are connected in the radial direction to the deformation bodies (4, 5, 6, 7) and in the axial direction to the middle portion (1), wherein the bearing ring elements (2, 3) are force-decoupled from the middle portion (1) by at least two outer circumferential grooves (9, 10).

2. The force measuring bolt according to claim 1, **characterised in that** the wall-like deformation bodies are designed as flat longitudinal webs (4, 5, 6, 7) extending linearly between the opposite inner shells (11) of the bearing ring elements (2, 3) and oriented towards the centre (12) of the ring surface, wherein a radial spacing is provided between at least two longitudinal webs (4, 5, 6, 7) opposing each other in the middle or centre (12).

3. The force measuring bolt according to claim 2, **characterised in that** four flat longitudinal webs (4, 5, 6, 7) of similar type and forming an angle of 90° with each other are provided inside the inner ring element space (13).

4. The force measuring bolt according to claim 2 or 3, **characterised in that** a cylindrical connecting bolt (15) which is connected force-lockingly on its outer shell (17) to the radial ends (16) of the longitudinal webs (4, 5, 6, 7) and is disposed symmetrically about the centre (12) of the ring element surface between the spaced-apart longitudinal webs (4, 5, 6, 7).

5. The force measuring bolt according to claim 4, **characterised in that** the cylindrical connecting bolt (15) of each bearing ring element (2, 3) ends at the outer cross-section surface (18) of the bearing ring element (2, 3) and is spaced apart in its axial extension from the end face (19) of the middle portion (1), wherein the distance (20) between the inner end face (21) of the connecting bolt (15) and the end face (19) of the middle portion (1) is symmetrical in relation to the outer circumferential groove (9, 10).

6. The force measuring bolt according to claims 1 to 5, **characterised in that** at least one longitudinal bore (14) or four longitudinal bores (14) arranged with an 90° offset from each other are provided in the middle portion (1) and are used as feed-throughs for the wiring of the measuring elements.

7. The force measuring bolt according to claims 1 to 3, **characterised in that** its entire measuring body is monolithic and consists of stainless steel or aluminium.

8. The force measuring bolt according to claims 1 to 7, **characterised in** that the end faces (18) of the outer bearing sections (2, 3) are hermetically sealed by a disk-shaped or plate-shaped lid (22).

## Revendications

1. Boulon de mesure de force, comprenant dans la direction axiale au moins une portion médiane (1) en forme de boulon rond et à ses extrémités deux sections de palier (2, 3) essentiellement rondes à l'extérieur et comprenant au moins des corps de déformation (4, 5, 6, 7) en forme de paroi qui s'étendent axialement vers l'extérieur et sont orientables dans la direction de la mesure de force F, sur lesquels sont appliqués au moins quatre capteurs de force de cisaillement (8) pour la détection d'une charge de force entre la portion médiane (1) et les deux sections de palier (2, 3) externes, **caractérisé en ce que** les deux sections de palier externes sont réalisées sous forme d'éléments de bague de palier (2, 3) qui entourent coaxialement les corps de déformation (4, 5, 6, 7) et sont reliés dans la direction radiale aux les corps de déformation (4, 5, 6, 7) et dans la direction axiale à la portion médiane (1), les éléments de bague de palier (2, 3) étant découplés de la portion médiane (1) en matière de force par au moins deux rainures (9, 10) extérieures périphériques.

2. Boulon de mesure de force selon la revendication 1, **caractérisé en ce que** les corps de déformation en forme de paroi sont réalisés sous forme de barrettes longitudinales plates (4, 5, 6, 7), qui s'étendent de façon linéaire entre les surfaces d'enveloppe intérieures (11) opposées des éléments de bague de palier (2, 3) et qui sont dirigées vers le point central (12) de la surface annulaire, une distance radiale étant prévue entre au moins deux barrettes longitudinales (4, 5, 6, 7) se faisant face dans le centre ou le point central (12).

3. Boulon de mesure de force selon la revendication 2, caractérisé en ce qu'à l'intérieur de la cavité interne de l'élément de bague (13) sont prévues quatre barrettes longitudinales (4, 5, 6, 7) plates du même type, lesquelles forment un angle de 90° l'une par rapport à l'autre.

4. Boulon de mesure de force selon la revendication 2 ou 3, caractérisé en ce qu'un boulon de liaison (15) cylindrique est disposé, de manière symétrique par rapport au point central (12) de surface d'élément de bague, entre les barrettes longitudinales (4, 5, 6, 7) espacées et est relié par liaison de force à l'extrémités radiale (16) des barrettes longitudinales (4, 5, 6, 7) sur sa surface d'enveloppe extérieure (17).

5. Boulon de mesure de force selon la revendication 4, **caractérisé en ce que** le boulon de liaison (15) cylindrique de chaque élément de bague de palier (2, 3) s'arrête sur la surface de section transversale extérieure (18) de l'élément de bague de palier (2, 3) et est, dans son extension axiale, espacé de la surface frontale (19) de la portion médiane (1), la distance (20) entre la surface frontale intérieure (21) du boulon de liaison (15) et la surface frontale (19) de la portion médiane (1) étant prévue de manière symétrique par rapport aux rainures (9, 10) extérieures périphériques.

6. Boulon de mesure de force selon les revendications 1 à 5, **caractérisé en ce qu'**il est prévu au moins un perçage longitudinal (14) ou quatre perçages longitudinaux (14) décalés de 90° afin de permettre le câblage de l'élément de mesure.

7. Boulon de mesure de force selon les revendications 1 à 3, **caractérisé en ce que** tout son corps de mesure est formé de manière monolithique et est en acier inoxydable ou en aluminium.

8. Boulon de mesure de force selon les revendications 1 à 7, **caractérisé en ce que** les surfaces frontales (18) des sections de palier (2, 3) extérieures sont hermétiquement fermées par un couvercle (22) en forme de disque ou d'assiette.
